Europäisches Patentamt

European Patent Office

Office européen des brevets

(19)

(11) Numéro de publication : **0 549 492 A1**

# (12) DEMANDE DE BREVET EUROPEEN

(21) Numéro de dépôt : **92420470.4**

(22) Date de dépôt : **18.12.92**

(51) Int. Cl.$^5$ : **C04B 18/10,** C04B 18/02, C04B 40/00, B28C 7/00

(30) Priorité : **27.12.91 FR 9116447**

(43) Date de publication de la demande : **30.06.93 Bulletin 93/26**

(84) Etats contractants désignés : **AT BE CH DE DK ES GB GR IE IT LI LU MC NL PT SE**

(71) Demandeur : **CIMENTS LAFARGE 3-5, boulevard Louis-Loucheur F-92210 Saint-Cloud (FR)**

(72) Inventeur : **Sorrentino, François 8 impasse J. Cartier F-69330 Meyzieu (FR)**
Inventeur : **Rollet, Michel 3 square de l'Hippodrome F-92210 Saint-Cloud (FR)**
Inventeur : **Kessler, Benoit 2 rue Sahut F-26200 Montelimar (FR)**
Inventeur : **Robin, Bernard Les Reynauds F-07400 Valvigneres (FR)**
Inventeur : **Jesus, Bernard Les Mûres F-07350 Cruas (FR)**

(74) Mandataire : **Tilloy, Anne-Marie IXAS Conseil, 15, rue Emile Zola F-69002 Lyon (FR)**

(54) **Procédé de traitement des résidus de l'incinération de déchets et produits obtenus.**

(57)    L'invention concerne un procédé de traitement des résidus de l'incinération des déchets urbains ou industriels comportant les étapes suivantes :
— une première étape d'analyse chimique des résidus d'incinération des déchets urbains ou industriels en vue de déterminer :
. leur teneur en sulfates solubles dans l'eau,
. l'action globale, retardatrice ou accélératrice, des ions solubles dans l'eau et pouvant gêner la prise ou le durcissement d'un ciment Portland,
— une deuxième étape au cours de laquelle on mélange ou concasse les résidus d'incinération des déchets urbains ou industriels, un liant hydraulique et des additifs, puis on granule avec de l'eau le mélange obtenu et on laisse durcir les granules, la nature et la proportion dudit liant hydraulique et desdits additifs ayant été choisies de façon à permettre à la fois la neutralisation physique et/ou chimique des éléments gênants à l'égard de la prise ou du durcissement d'un ciment Portland présents dans les déchets et l'obtention de granules de basse porosité et de basse perméabilité.

EP 0 549 492 A1

Jouve, 18, rue Saint-Denis, 75001 PARIS

La présente invention concerne un procédé de traitement des résidus de l'incinération de déchets urbains ou industriels ainsi que les produits obtenus à l'aide d'un tel procédé.

Les problèmes soulevés par la production de plus en plus importante de déchets de tous types, aussi bien par les industries que par les zones urbanisées, sont en nombre et de difficulté croissants. De plus, les préoccupations grandissantes au sujet de l'environnement suscitent l'apparition constante de normes strictes rendant de plus en plus difficile l'élimination des déchets par mise en décharge directe, par stockage, par injection ou enfouissement sous terre.

Il faut donc s'attendre à ce que, à l'avenir, des techniques comme l'incinération jouent un rôle de tout premier plan en tant que manières acceptables à l'égard de la pollution de l'environnement pour détruire ces déchets. Employant la décomposition thermique par oxydation thermique à haute température pour décomposer les fractions organiques des déchets et réduire les volumes, l'incinération génère toutefois elle aussi ses propres déchets. Les types de résidus de l'incinération des déchets peuvent se classer en deux grandes catégories : les mâchefers qui peuvent faire l'objet d'une valorisation et les résidus de l'épuration des fumées. Parmi ces derniers existent les cendres volantes ou suies issues d'un simple dépoussiéreur, les résidus des filtres-presses et les résidus de déchloruration. Lorsque les déchets sont brûlés dans un incinérateur, plusieurs types de déchets sont créés suivant le procédé de traitement des résidus. On peut distinguer 4 procédés de traitement des résidus d'épuration des fumées : les voies sèche et semi-sèche et les voies semi-humide et humide.

Dans le cas du procédé sec, un réactif sec et pulvérulent est injecté par voie pneumatique. Le solide absorbe les polluants qui sont neutralisés par réaction à sec et à haute température (200°C à 300°C), ensuite il est nécessaire de capter les produits de la réaction et le réactif en excès.

Dans le cas du procédé semi-sec, pour améliorer l'efficacité du captage, le réactif sec est injecté dans les fumées préalablement humidifiées et refroidies jusqu'à 140°C/190°C dans un réacteur spécifique.

Dans le cas de la voie semi-humide, un réactif boueux est injecté dans les fumées, un système de filtre va capter les produits de réaction et l'excès de réactif.

La voie humide quant à elle s'effectue en trois phases :
- dépoussiérage amont destiné à supprimer les plus grosses poussières,
- lavage des gaz,
- et traitement des eaux de lavage.

Les résidus de l'incinération des déchets entrent dans le cadre des déchets visés par les mesures prises pour limiter la pollution de l'air, de l'eau et des sols et font qu'il y a un constant besoin de systèmes plus efficaces pour les rendre inertes en vue de leur stockage en centre d'enfouissement technique ou leur recyclage. Et, de nombreux auteurs ont tenté de mettre au point de tels systèmes.

Selon une première solution, on a proposé de mélanger ces déchets à un liant hydraulique en vue d'une mise en décharge ultérieure.

Ainsi, le brevet américain n°4 744 829 décrit un procédé de production d'agglomérats résistant à la lixiviation à partir de déchets tels que des cendres ou des poussières de filtre, selon lequel les déchets sont finement broyés puis introduits dans une suspension colloïdale de ciment. On fabrique, à partir de ce mélange, des granulés qui doivent, après durcissement, résister à la lixiviation.

L'inconvénient principal d'un tel procédé réside dans le fait que le nombre d'interactions entre le déchet et le ciment est considérablement augmenté par l'accroissement de la surface de contact entre le déchet et le ciment résultant du broyage poussé des déchets. Il s'ensuit que le résultat escompté n'est atteint que si le déchet renferme peu d'éléments susceptibles de perturber la prise du ciment. Par ailleurs, l'obtention d'une suspension colloïdale de ciment implique l'utilisation d'un ciment ayant subi un surbroyage préalable et d'un rapport eau/ciment (E/C) élevé, de l'ordre de 2. Dans ces conditions, la structure des granulés obtenus est trop poreuse pour résister correctement à la lixiviation.

Cette première solution est également décrite dans le brevet américain n°3 947 283 qui préconise le conditionnement des résidus de l'incinération des déchets avec du ciment Portland et de la chaux ou du ciment Portland et du sulfoaluminate de calcium ou des composés sulfatés.

Or, les résidus de l'incinération des déchets peuvent contenir des éléments et composés qui interagissent avec les liants hydrauliques, perturbent les phénomènes de prise et de durcissement (retard ou accélération de la prise conduisant à un raidissement rapide et en conséquence à un produit fragile, cassant) ou peuvent provoquer des gonflements (expansion). La stabilisation par les liants hydrauliques est donc incomplète et inefficace par le fait que les phénomènes ultérieurs de lixiviation sont favorisés par les fissures et/ou les ruptures formées au cours de la prise et du durcissement et ultérieurement.

Dans le cas des résidus d'ordures ménagères, les problèmes qui apparaissent sont liés aux métaux lourds tels que Hg, Cd, Zn, Cu, Ni, Cr et aux ions chlore, sulfate et cyanure qui proviennent des résidus principaux : matières organiques et plastiques, papiers et cartons, textiles, cuirs et caoutchoucs, verres, métaux, piles et accumulateurs.

2

Chacun de ces ions ou métaux peut provoquer des retards ou des accélérations de la prise et des gonflements, autant de problèmes qui vont dégrader la pâte de ciment et l'empêcher de jouer son rôle de liant hydraulique.

Pour pallier ces inconvénients, on a préconisé une seconde solution consistant à rajouter aux résidus d'incinération des déchets, si besoin en mélange avec un liant hydraulique supplémentaire, divers produits tels que :

de la bentonite (brevet américain n°4 149 968), de la vermiculite (brevet américain n°4 113 504), de la balle de riz (brevet japonais n°77 100 744), des lignosulfonates de sodium ou de calcium (brevets japonais n°81 53 796 et n° 75 44 977), de l'aluminate de calcium (brevet japonais n°75 93 264), de l'acétate de polyvinyle, du stéarate d'aluminium (brevet japonais n°79 162 844), du bicarbonate de sodium (brevet japonais n°80 44 355), des polymères (brevets japonais n°80 29 119 et américain n°4 174 293), de l'alcool polyvinylique (brevet japonais n°77 111 260), du laitier et du gypse (brevet américain n°4 266 980), du sulfate de calcium (brevet américain n°3 947 284), du chlorure de calcium (brevet américain n°1 909 849), des silicates solubles dans l'eau (brevets américains n°2 081 541, n°3 837 872, n°3 841 102, n°4 012 320, n°3 892 636, n°4 600 514 et n°4 518 508), des systèmes à base de chaux et des cendres volantes, de chaux et d'argile ou de chaux et de poussières de fours de cimenterie (brevet américain n°3 720 609).

Cependant les problèmes précités rencontrés au cours de la prise et du durcissement du liant hydraulique subsistent du fait que les résidus d'incinération des déchets ne sont pas inertes chimiquement et interagissent avec le liant. En effet, les déchets apportent avec eux leur lot d'ions ou de métaux lourds qui vont perturber les phénomènes de prise, de durcissement, entraîner des gonflements qui vont occasionner la rupture ou la fissuration du matériau. La résistance à la lixiviation sera considérablement amoindrie. De tels problèmes rendent inefficace la stabilisation des résidus d'incinération des déchets par liant hydraulique selon les systèmes précités.

Selon une troisième solution, on a proposé d'effectuer le conditionnement des résidus d'incinération des déchets en au moins deux étapes de stabilisation : une première étape au cours de laquelle les résidus sont mélangés avec un liant hydraulique et éventuellement divers réactifs pour piéger chimiquement ou physiquement les éléments nocifs vis-à-vis de l'environnement, suivie d'une seconde étape, visant à renforcer l'action du liant hydraulique utilisé dans la première étape, qui consiste à ménager une barrière pour s'opposer aux phénomènes de lixiviation. Selon le cas, cette barrière est obtenue par enrobage à l'aide d'une composition à base d'un liant hydraulique tel que du ciment Portland, ou d'un liant organique tel qu'un stéarate ou du bitume. De nombreux systèmes particuliers décrivant le conditionnement en deux étapes des résidus d'incinération des déchets ont été proposés. Une telle solution est décrite notamment dans la demande de brevet japonais n°61 0910050, dans la demande internationale n°89/12498 et dans le brevet allemand n°3 808 187.

La demande de brevet japonais n°61 0910050 vise un procédé de fabrication d'agrégats ou charges pour béton, à partir de cendres d'incinération. Selon ce procédé, les cendres sont broyées, mélangées avec du ciment (environ 40 % pondéral) et traitées jusqu'à ce que le ciment ait durci partiellement ou complètement. Le béton ainsi obtenu est alors réduit par broyage en particules qui sont mélangées à nouveau avec du ciment (environ 40 % pondéral) et éventuellement du sable. Après durcissement, une autre réduction est effectuée par broyage en vue d'obtenir des particules de taille déterminée ou des granulats qui seront utilisés pour la fabrication de béton.

Une telle solution n'est toutefois pas économique car elle comprend plusieurs étapes de broyage et elle requiert d'importantes quantités de ciment. Elle tend à résoudre les problèmes de prise et de durcissement évoqués ci-dessus par une dilution des déchets dans du ciment. En raison des opérations de broyage, les interactions entre le liant hydraulique et les éléments nocifs pour la prise et le durcissement du liant sont favorisées aussi bien dans la première étape que dans la deuxième. C'est pourquoi il n'est pas possible d'obtenir une stabilisation efficace de tous les déchets dans une structure dense et quand ces éléments nocifs sont présents.

Selon la demande internationale n°89/12498, les résidus d'incinération des déchets sont combinés à un agent de traitement visant des métaux lourds tel que de l'argile diatomée, qui est de préférence additionné de ciment Portland et les granulats obtenus sont ensuite enrobés à l'aide d'une composition cimentière.

Cependant, même dans un tel cas, les éléments nocifs pour la prise et le durcissement présents dans les résidus tels que les ions $Cl^-$, $SO_4^{--}$,... peuvent gêner l'hydratation du ciment utilisé pour former les granulats et par voie de conséquence le ciment constituant la coquille d'enrobage, au moins à la périphérie de la coquille en contact avec le granulat. Ceci conduit à une absence de liaison physique ou chimique entre le granulat et la coquille d'enrobage qui fragilise cette dernière qui, en cas de choc, de déformation ou de forte expansion, pourra se briser.

La solution proposée par le brevet allemand n°3 808 187 consiste à broyer les déchets, à leur faire subir un traitement à la chaux puis une granulation sous pression, un traitement thermique et un broyage. Le mélange obtenu est alors mélangé avec du ciment, puis à nouveau granulé.

Ces solutions laissent irrésolus les problèmes évoqués plus haut ou font appel à des traitements plus lourds pour tenter de les résoudre.

Les procédés décrits dans l'art antérieur ne prennent donc pas en compte la diversité des compositions des résidus et de ce fait ne fonctionnent qu'avec des gammes restreintes de produits à traiter.

On n'a donc pas conçu jusqu'à présent de procédé de traitement des résidus d'incinération des déchets qui soit à la fois simple, applicable à tous les résidus d'incinération et efficace en ce sens qu'il assure une stabilisation efficace sur le plan de la pollution de l'environnement aussi bien à court, qu'à moyen et long terme. La présente invention a donc pour but de remédier aux inconvénients énoncés ci-dessus et de proposer un tel procédé de traitement.

Plus précisément, l'invention a pour objet un procédé de traitement des résidus d'incinération des déchets urbains ou industriels comportant les étapes suivantes :

- une première étape d'analyse chimique des résidus d'incinération des déchets urbains ou industriels en vue de déterminer :
  . leur teneur en sulfates solubles dans l'eau,
  . l'action globale, retardatrice ou accélératrice, des ions solubles dans l'eau et pouvant gêner la prise ou le durcissement d'un ciment Portland,
- une deuxième étape au cours de laquelle on mélange ou concasse les résidus d'incinération des déchets urbains ou industriels, un liant hydraulique et des additifs, puis on granule avec de l'eau le mélange obtenu et on laisse durcir les granules, la nature et la proportion dudit liant hydraulique et desdits additifs ayant été choisies de façon à permettre à la fois la neutralisation physique et/ou chimique des éléments gênants à l'égard de la prise ou du durcissement d'un ciment Portland présents dans les déchets et l'obtention de granules de basse porosité et de basse perméabilité.

Le terme granules doit être entendu comme englobant tous les produits issus des opérations de granulation, de pelletisation, d'extrusion, d'agglomération ou de toute autre opération similaire connue de l'homme du métier.

Conformément à l'invention, il est possible de traiter tous les types de résidus d'incinération.

Les suies ou gâteaux de filtration ont des dimensions variables mais généralement inférieures ou voisines de 1 cm. Ils peuvent donc être traités tels quels.

Les autres résidus seront au préalable soumis à un concassage lorsque leurs dimensions moyennes sont trop grandes, de façon à réduire leurs dimensions de préférence à une valeur inférieure ou voisine de 1 cm.

Le procédé selon l'invention permet avantageusement de neutraliser les ions libérés en solution par les résidus d'incinération des déchets et qui pourraient être nocifs pour l'hydratation d'un ciment Portland, à l'aide d'un liant hydraulique et d'additifs appropriés, déterminés suite à l'analyse de la première étape.

Grâce à la première et à la seconde étape du procédé selon l'invention on fabrique simplement, au moyen d'un liant hydraulique, de divers additifs et d'eau, des granules de basse porosité et de faible perméabilité dont les propriétés mécaniques permettent leur manipulation dans des conditions normales, sans risque de rupture ou de fissuration.

Parallèlement, on a trouvé de façon surprenante que dans les granules selon l'invention, une grande partie des éléments nocifs pour l'environnement était fixée de façon stable. En effet, les granules selon l'invention présentent des résistances mécaniques et une résistance à la lixiviation satisfaisantes et pouvant satisfaire dans certains cas aux exigences prescrites en matière d'environnement de certaines décharges : leur stockage tel quel, c'est-à-dire sans traitement supplémentaire, peut donc être envisagé dans ces décharges.

Les résultats particulièrement avantageux ci-dessus énoncés sont atteints conformément à l'invention lorsque le choix du liant hydraulique et des additifs prend en compte deux paramètres :

- l'action globale des ions solubles gênants pour la prise ou le durcissement d'un ciment Portland libérés lors du trempage du déchet dans de l'eau,
- et la teneur en sulfates solubles.

La détermination du liant hydraulique et des divers additifs est faite conformément à l'invention de la manière suivante :

- des échantillons du résidu d'incinération sont prélevés et trempés dans de l'eau en respectant un rapport masse d'eau/masse de résidu de 10 environ ;
- la solution aqueuse est analysée de manière connue, par exemple par fluorescence X ou par la méthode connue sous l'appellation de Inductively Coupled Plasma (ICP).

Les ions relâchés sont alors classés en fonction de leur caractère accélérateur ou retardateur de la prise ou du durcissement d'un ciment Portland. Les principaux éléments perturbateurs de l'hydratation de ce ciment connus de l'homme du métier pour leur action retardatrice sont le zinc, le phosphore, le manganèse, le baryum, le chrome, le cadmium et le plomb.

Les principaux accélérateurs sont le chlore, le potassium, le sodium et l'alumine.

Il faut également tenir compte des associations que les ions et contre-ions vont réaliser entre eux. Ainsi, par exemple, les ions chlorure sont des accélérateurs sauf s'ils sont sous forme de chlorure de magnésium ou d'aluminium, auquel cas ce sont des retardateurs. De même, les sulfates produisent un effet retardateur lorsqu'ils sont sous forme de sulfate de calcium tandis qu'associés à un métal alcalin, ils agissent comme des accélérateurs. Les résultats de l'analyse de la solution permettent d'établir un bilan matière et électrique de ces ions ; lorsque la somme des concentrations molaires des ions retardateurs est supérieure à la somme des concentrations molaires des ions accélérateurs, l'action globale des ions en solution est qualifiée de retardatrice. Dans le cas contraire, l'action globale est accélératrice ; lorsqu'il y a égalité ou quasi-égalité, elle est qualifiée de neutre.

Les sulfates solubles doivent en outre être considérés une seconde fois. En effet, les sulfates peuvent provoquer un phénomène d'expansion ou de gonflement qui conduit généralement à la destruction des liaisons hydrauliques et à la fissuration ou pulvérisation des granules. Ce phénomène est dû à la combinaison des ions sulfates avec les ions aluminates pour former de l'ettringite ou sulfo-aluminate de calcium hydraté.

Lorsque la teneur en ions sulfates solubles est élevée, c'est-à-dire lorsque la solution obtenue par trempage du résidu dans l'eau selon un rapport masse d'eau/masse de résidu de 10 environ est saturée en sulfates, le liant hydraulique choisi sera du clinker broyé. Dans le cas contraire, le liant hydraulique sera du ciment Portland, du ciment à base de sulfoaluminate de calcium ou un mélange de ces deux ciments. Il va de soi que d'autres ciments tels que le ciment alumineux, le ciment magnésien pourraient convenir à la place du ciment Portland. Cependant, leur utilisation est peu intéressante d'un point de vue économique en raison de leur coût de revient.

Un additif est ajouté au liant hydraulique afin de contrer l'action globale des ions. Lorsque celle-ci est retardatrice, l'additif sera un accélérateur ou un mélange d'accélérateurs tels que la triéthanolamine, le formiate de calcium ou tout autre accélérateur pour ciment Portland connu de l'homme du métier. Il est également possible d'ajouter du ciment alumineux qui, mélangé à un ciment Portland, joue le rôle d'accélérateur. Toutefois lorsque le liant hydraulique utilisé est du ciment à base de sulfoaluminate de calcium, il n'est plus nécessaire d'ajouter un accélérateur.

Si l'action globale des ions est accélératrice, on ajoute un retardateur ou un mélange de retardateurs tel qu'un sucre, du tripolyphosphate de sodium, un complexant du calcium ou tout autre retardateur de la prise ou du durcissement d'un ciment Portland connu de l'homme du métier.

Selon l'invention, la proportion d'additif à ajouter est généralement inférieure à 5 % de la masse de liant hydraulique, et de préférence inférieure à 2 %, sauf dans le cas où l'on utilise du ciment alumineux : elle est alors plus importante mais demeure inférieure à 30 %.

Le liant hydraulique renfermant l'additif est alors ajouté au résidu de façon à réaliser un mélange résidu/liant à teneur massique en liant comprise entre 15 % et 70 % et de préférence entre 30 % et 40 % massique.

Une faible proportion d'eau, de préférence 10 % à 30 % d'eau par rapport à la masse de liant hydraulique renfermant l'additif suffit et contribue à l'obtention de granules de basse porosité et de faible perméabilité. Le mélange est granulé, pelletisé, extrudé ou aggloméré de façon connue. On peut alors laisser les granules durcir à l'air libre ou au moyen de tout autre procédé de maturation connu, comme par exemple par traitement thermique.

Conformément à l'invention, la prise et le durcissement des granules aura bien lieu, grâce au choix du liant hydraulique et des additifs adaptés aux déchets traités.

Des problèmes non résolus dans l'art antérieur tels que la formation d'éttringite ou de sulfoaluminate de calcium hydraté, qui survient lorsque la teneur en sulfates solubles est élevée et l'action globale des ions est retardatrice, se trouvent ainsi résolus. En effet, l'emploi selon l'invention d'un accélérateur dans ce cas permettra à l'ettringite de se former rapidement, bien avant que la prise et le durcissement n'aient commencé. Le mélange liant hydraulique + additifs + déchets + eau est alors suffisamment élastique pour supporter des variations dimensionnelles occasionnées par l'expansion. Car si la formation d'ettringite a lieu après le durcissement, elle peut entraîner la destruction du granule.

A l'issue de la deuxième étape, c'est-à-dire après durcissement, des tests de lixiviation conformes à ceux de la norme AFNOR NF X 31-210 et décrits dans le projet de circulaire du 12 juin 1991 du "Ministre délégué à l'Environnement et à la Prévention des Risques Majeurs" adressé à "Mmes et MM. les Préfets" relatif à l'élimination des fumées des usines d'incinération de résidus urbains, sont effectués sur les granules de la manière suivante :

les granules sont introduits dans de l'eau à raison de 100 g de nodules dans un litre d'eau pendant 16 heures et l'eau est renouvelée 3 fois. La fraction soluble ainsi que les éléments nocifs sont analysés et ne doivent pas dépasser 5 % pour la fraction soluble, et pour le mercure, le cadmium, le plomb, l'arsenic, le cuivre, le carbone total organique et l'ion chlorure respectivement 0,2 mg, 1 mg, 6 mg, 2 mg, 20 mg, 400 mg et 10 g par kg de résidu.

L'objectif de l'invention est atteint de façon optimale lorsque les granules obtenus à l'issue de la deuxième étape du procédé selon l'invention présentent la composition suivante (exprimée en pourcentage pondéral rapporté au poids total) :

$SiO_2$ de 15 % à 45 %, $Al_2O_3$ de 9 % à 26 %, $Fe_2O_3$ de 0,5 % à 10 %, CaO de 9 % à 53 %, MgO de 1 % à 7 %, $Na_2O$ de 0,5 % à 6 %, $K_2O$ de 0,3 % à 6 %, sulfates de 2 % à 10 %, Cl de 0,5 % à 6 %,

et des éléments mineurs à raison de 3 000 mg/kg à 100 000 mg/kg de résidus traités avec en proportion pondérale :

Zn de 40 % à 70 %, Pb de 1 % à 30 %, Cu de 0 % à 5 %, Sn de 1 % à 5 %, Ba de 0,5 % à 9,52 %, Cd de 0,5 % à 2 %, Cr total de 0,5 % à 2 %, Ni de 0,2 % à 1 %, Co de 0,1 % à 1 %, Ag de 0,2 % à 1 %, Hg de 0,01 % à 0,05 %, As de 0,24 % à 0,4 %, Mn de 0,5 % à 6 %, Ti de 5 % à 20 %, Se de 0,01 % à 0,10 %, Be de 0,01 % à 0,1 %, V de 0,1 % à 1 %, et F de 0,01 % à 0,20 %.

On observe alors que leur résistance à la pénétration (dureté) mesurée par la méthode VICKERS (selon la norme AFNOR A-03 150) est alors supérieure à 20 Kg/cm$^2$ (2 MPa) et leur résistance à la compression est supérieure à 50 Kg/cm$^2$ (5 MPa). Les résistances indiquent que les réactions hydrauliques se sont déroulées correctement. Leurs valeurs élevées donnent des présomptions sur la qualité des tests de lixiviation mais non des certitudes.

Selon la destination des granules, et en particulier le règlement des décharges, la fixation des éléments nocifs pour l'environnement au sein des granules peut ne pas être suffisante.

Elle est, dans ce cas, parachevée au cours d'une troisième étape d'incorporation des granules dans une pâte cimentière. Quelle que soit la composition des résidus d'incinération, les granules obtenus conformément à l'invention sont inertes vis-à-vis de la prise ou du durcissement d'un ciment Portland. En effet, le choix du liant hydraulique et des additifs a permis de fixer chimiquement ou physiquement dans la deuxième étape la majorité des composants du résidu et en particulier les ions gênants pour la prise ou le durcissement d'un ciment Portland.

L'adaptation de la pâte cimentière à la composition des déchets n'a donc pas lieu d'être lors de cette troisième étape.

Il est donc possible, à l'exception du cas où le liant hydraulique de la seconde étape est un ciment à base de sulfoaluminate de calcium et où on ne peut utiliser qu'une pâte cimentière à base de ciment alumineux, de préparer la pâte cimentière de la troisième étape à partir de n'importe quel ciment. Cependant, on choisit de préférence du ciment Portland car il permet d'atteindre économiquement des niveaux de résistance mécanique élevés, aussi bien à court terme qu'à long terme.

L'incorporation des granules dans une matrice imperméable lors de cette troisième étape réalise la fixation physique des ions n'ayant pas été fixés dans la deuxième étape. Pour ce faire, les granules sont incorporés dans la quantité de pâte cimentière nécessaire et suffisante pour réaliser leur enrobage.

La pâte cimentière peut renfermer des adjuvants tels que les plastifiants ou des plastifiants réducteurs d'eau. La pâte cimentière peut également renfermer des ajouts de dimension moyenne inférieure ou de l'ordre de 100 microns, tels que des fumées de silice ou des fillers : les particules de dimension moyenne supérieure à 100 microns sont en effet à éviter si on veut réaliser une barrière physique efficace à l'encontre de la diffusion des éléments nocifs et ceci sous la forme d'une matrice dense.

La barrière de diffusion ainsi constituée par la matrice imperméable à basse porosité emprisonne les métaux lourds et autres substances nuisibles à l'environnement telles que le chlore. La possibilité d'accéder à cette matrice cimentière à haute performance résulte du traitement selon l'invention réalisé au cours des première et deuxième étapes.

Les conditions de gâchage, de prise et de durcissement de cette pâte cimentière seront avantageusement celles conduisant à l'obtention d'un béton de basse porosité et de basse perméabilité. Ainsi, le rapport massique eau/ciment de la pâte cimentière est généralement compris entre 0,3 et 0,7.

Dans ce même but, le rapport pondéral granules/pâte cimentière est déterminé de façon connue en soi, notamment en fonction de la distribution granulométrique des granules.

La résistance du béton obtenu à la lixiviation est supérieure aux valeurs définies dans le projet de circulaire cité plus haut.

Le béton obtenu à l'issue de la troisième étape présente alors une résistance à la compression élevée de l'ordre de 1 MPa à 5 MPa et pouvant excéder 5 MPa.

Le tableau suivant donne, à titre d'illustration, différents modes de réalisation de l'invention. Selon les résultats d'analyse obtenus, sont précisés les liants hydrauliques et les additifs adaptés pour que l'hydratation du liant conduise à des granules de basse porosité et de basse perméabilité.

Ce tableau précise en outre le type de pâte cimentière pouvant convenir pour l'enrobage des granules si la troisième étape s'avère nécessaire pour renforcer la résistance à la lixiviation des granules.

| 1ère étape | | | | | | |
|---|---|---|---|---|---|---|
| Teneur en sulfates solubles | - | | - | + | | + |
| Action globale | - | - | + | - | - | + |
| Origine des déchets | VS VSS VSH | VS VSS VSH | VH | VS VSH VSS | VSH VSS VS | VH |

| 2e étape | | | | | | |
|---|---|---|---|---|---|---|
| Liant hydraulique | CP | CSA | CP | CK | CK | CK |
| Addition | CA | - | ret | accél. | CA | ret |
| **3e étape** | | | | | | |
| Pâte cimentière | CP | CA | CP | CP | CP | CP |

Légende

-     action globale retardatrice des résidus d'incinération des déchets
+     action globale accélératrice des résidus d'incinération des déchets
VS     voie sèche
VSS     voie semi-sèche
VSH     voie semi-humide
VH     voie humide
CP     ciment Portland
CSA     ciment à base de sulfo-aluminate de calcium
CK     clinker broyé de ciment Portland
CA     ciment alumineux
accél.     ajout accélérateur
ret.     ajout retardateur

L'invention sera mieux comprise à l'aide des exemples non-limitatifs suivants dans lesquels :
- les proportions de liant hydraulique sont exprimées en pourcentages massiques de liant hydraulique (additif inclus) rapportés à la masse de mélange résidu + liant ;
- les proportions d'additif sont exprimées en pourcentages massiques d'additif rapportés à la masse de liant hydraulique et d'additif ;
- les proportions d'eau sont exprimées en pourcentages massiques d'eau rapportés à la masse de liant hydraulique et d'additif.

## EXEMPLE 1

Un résidu d'incinération d'ordures ménagères obtenu par voie sèche (suies ou cendres) contient 5 200 mg de Pb par kg de résidu, 360 mg de Cd par kg de résidu, 60 mg de Hg par kg de résidu et 2 500 mg de Zn par kg de résidu, plus 70 000 mg de chlore par kg de résidu et des matières organiques. LeS tests de lixiviation normalisés (AFNOR X 31-210) montrent une fraction soluble de 25 % suivant la norme précitée et des taux de dissolution (pour un total de trois lixiviations) de 5 mg de Pb par kg de résidu traité, 3 mg de Cd par kg de résidu, 6 mg de Hg par kg de résidu et 3 mg de Zn par kg de résidu et 60 000 mg de chlore par kg de résidu.

L'analyse ayant montré que la teneur en sulfates solubles n'est pas suffisamment élevée pour provoquer ultérieurement des phénomènes de gonflement et que l'action globale des ions est retardatrice, le résidu est mélangé avec du ciment Portland (50 % de ciment Portland et 50 % de déchet) et un accélérateur de durcissement à base d'aluminates de calcium (30 % de ciment alumineux de composition minéralogique : 50 % d'aluminate monocalcique, 10 % d'hepta-aluminate dodécalcique, appelée ordinairement $C12A7$ et 30 % d'aluminoferrite de calcium), puis mixé avec 15 % d'eau.

Après durcissement à l'air les granules obtenus par ce mélange ont une résistance à la pénétration de 37,2 $kg/cm^2$ pour l'extérieur du granule et de 32,2 $kg/cm^2$ pour l'intérieur, mesurée suivant la norme AFNOR A 03-150 (méthode de VICKERS). Ces résistances montrent que les réactions hydrauliques se sont correctement déroulées, néanmoins les tests de lixiviation sur les granules montrent une dissolution du chlore de 2 000 mg/litre. L'étape suivante est donc nécessaire.

Les granules sont donc repris et stabilisés dans une matrice cimentière où ils jouent le rôle de charge neutre. La quantité de ciment est celle nécessaire pour enrober tous les granules, elle est de 150 kg par mètre cube de matériau produit.

La résistance à la compression à deux jours des blocs ainsi constitués est de 120 $kg/cm^2$. Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyses. Les coefficients de diffusion des ions chlorure dans la matrice sont de :
255 500 x $10^{-9}$ $cm^2$/sec à 20°C et de 428 400 x 10-9 $cm^2$ à 30°C. Ces mesures sont effectuées par la méthode de la cellule de diffusion. L'échantillon (disque de 50 mm et de 5 mm d'épaisseur) délimite deux compartiments dans la cellule de diffusion. Un compartiment contient une solution saturée en chaux et l'autre une solution saturée en chaux additionnée de chlorure de sodium. Périodiquement des prélèvements sont effectués et le chlore est analysé et on peut ainsi déterminer le coefficient de diffusion du chlore à travers un échantillon donné.

## EXEMPLE 2

Des suies d'incinération d'ordures ménagères issues du procédé par voie sèche sont analysées.

Leur composition chimique est analogue à celle des suies de l'exemple 1 : la teneur en sulfates solubles n'étant pas suffisamment élevée pour provoquer ultérieurement des gonflements et l'action globale des ions étant retardatrice, les suies sont mélangées à du ciment Portland de composition chimique ($SiO_2$ = 21, 8 %, CaO = 66,6 %, $Al_2O_3$ = 6,25 %, $Fe_2O_3$ = 2,3 %, MgO = 1,1 %, Sulfates = 3,5 %, $K_2O$ = 0,40 %, $Na_2O$ = 0,07 %, $TiO_2$ = 0,31 %, $Mn_2O_3$ = 0,04 %, $P_2O_5$ = 0,10 %), à un accélérateur de durcissement à base d'aluminates de calcium (30 % de ciment alumineux de composition minéralogique identique à celui employé dans l'Exemple 1) et à 15 % d'eau.

Après durcissement à l'air, les particules ont une résistance à la pénétration moyenne de 35 $kg/cm^2$, (AFNOR A 03-150). Ces résistances montrent que l'hydratation du ciment s'est déroulée correctement. Par contre, les tests de lixiviation montrent encore des ions chlore en solution (3 000 mg/litre) mesurés par ICP (Inductively Coupled Plasma) et ne sont donc pas satisfaisants.

Les granules sont ensuite repris et stabilisés dans une matrice cimentière où ils jouent le rôle de charge inerte. La matrice cimentière contient 156 kg de ciment Portland/$m^3$ de produit final et le rapport eau/ciment est égal à 0,69.

La perméabilité du béton obtenu est de 8 x $10^{-12}$ m/sec dans les conditions opératoires de mesure décrites dans l'exemple 1. Le test de relargage AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 3

Les suies d'incinération d'ordures ménagère issues du procédé par voie sèche sont analysées.

Leur composition chimique est analogue à celle des suies de l'exemple 1 : la teneur en sulfates solubles n'étant pas suffisamment élevée pour provoquer ultérieurement des gonflements et l'action globale des ions étant retardatrice, les suies sont mélangées à du ciment Portland (35 %) et à l'accélérateur de durcissement à base d'aluminates de calcium (15 %) et ensuite granulées avec 15 % d'eau. Après durcissement à l'air, les granules ont une résistance à la pénétration moyenne de 35 kg/cm$^2$ (test AFNOR A 03-150) et la composition chimique suivante (exprimée en pourcentage pondéral) :

$SiO_2$ = 22,3 %, $Al_2O_3$ = 21,66 %, $Fe_2O_3$ = 6,74 %, CaO = 33,45 %, MgO = 3,15 %, $Na_2O$ = 2,25 %, $K_2O$ = 1,85 %, Sulfates = 4,02 %, Cl = 2,5 % et exprimé en mg/kg de granules,

Zn = 9 124, Pb = 3 553, Cu = 406, Sn = 820, Ba = 1 512, Cd = 150, Cr total = 250, Ni = 50, Co = 17, Ag = 170, Hg = 4, As = 39, Mn = 750, Ti = 3 500, Se = 8, Be = 13, V = 50, F = 63.

Les résistances à la pénétration élevées montrent que les réactions d'hydratation se sont déroulées correctement, mais les tests de lixiviation sur granules ne sont pas satisfaisants et montrent qu'il est nécessaire de procéder à la troisième étape.

Les granules sont donc repris et stabilisés dans un béton où ils jouent le rôle de granulat. La quantité de ciment est celle nécessaire pour enrober tous les granules : elle est de 156 kg de ciment Portland /m$^3$ de béton total avec un rapport eau/ciment égal à 0,69.

La perméabilité du béton est de 8 x 10$^{-12}$ m/sec. Le test de relargage AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 4

Des suies d'incinération d'ordures ménagères obtenues par le procédé par voie sèche sont analysées.

Leur composition chimique montre une teneur en sulfate solubles suffisamment élevée pour provoquer des gonflements du matériau et une action globale des ions solubles dans l'eau retardatrice. Ces suies sont additionnées de clinker de ciment Portland (50 %), de l'accélérateur de durcissement à base d'aluminates de calcium (20 %), et puis granulées avec 15 % d'eau. Le durcissement s'effectue en 3 heures. Les granules ont la composition suivante (exprimée en pourcentage pondéral) :

$SiO_2$ = 26,8 %, $Al_2O_3$ = 12,3 %, $Fe_2O_3$ = 3,22 %, CaO = 39,6 %, MgO = 3,43 %, $Na_2O$ = 2,32 %, $K_2O$ = 2,1 %, Sulfates = 4,12 %, Cl = 2,49 % et exprimée en mg/kg de granules,

Zn = 9 200, Pb = 355, Cu = 206, Sn = 820, Ba = 1712, Cd = 150, Cr total = 200, Ni = 50, Co = 17, Ag = 170, Hg = 4, As = 40, Mn = 700, Ti = 3 000, Se = 8, Be = 10, V = 50, F = 63.

La résistance à la lixiviation des granules étant insuffisante, les granules sont repris et enrobés dans une barbotine de ciment contenant 223 kg de ciment/m$^3$. La perméabilité est de 28 x 10$^{-12}$ m/s. Le test de relargage AFNOR X 31-210 modifié sur des prismes de 4 cm par 4 cm par 8 cm donne une fraction soluble inférieure à 5 % et des taux d'extraction inférieurs à la limite de détection des appareils.

## EXEMPLE 5

Des mâchefers, résidus d'incinération d'ordures ménagères et contenant après déférisation, des oxydes de silicium (55 %), d'aluminium (6 %), de calcium (12%), de sodium (8 %) et des éléments divers à plus faibles proportions (Pb, Cr, Cu, Mn, Zn respectivement à 0,2 %, 0,01 %, 0,5 %, 0,3 %, 0,2 %) révèlent, après analyse, une teneur en sulfates solubles non élevée et une action globale retardatrice.

Ils sont alors mélangés à du ciment Portland à raison de 70 % de résidu pour 30 % de ciment. Un ciment à base d'aluminates de calcium tel que celui de l'exemple 1 est ajouté à raison de 30 % par rapport au liant.

Après granulation et durcissement, les granules obtenus présentent une résistance à la compression de 10 MPa.

Toutefois, leur résistance à la lixiviation n'étant pas satisfaisante, ils sont enrobés dans une matrice à base de ciment Portland de faible porosité (150 kg de ciment/m3).

## EXEMPLE 6

Des mâchefers, résidus d'incinération d'ordures ménagères et de composition identique à celle de l'exemple 5 sont granulés avec du ciment Portland (50 %) en présence d'un accélérateur à base de formiate de sodium (1 %).

Dès que le durcissement est suffisant (10 MPa) les granules sont analysés. Leur composition chimique est (exprimée en pourcentage pondéral) :

$SiO_2$ = 38,5 %, $Al_2O_3$ = 5,9 %, $Fe_2O_3$ = 6,1 %, CaO = 38,6 %, MgO = 1,54 %, $Na_2O$ = 4,09 %, $K_2O$ = 0,96 %,

Sulfates = 3,17 %, Cl = 0,2 % et exprimée en mg/kg de granules, Zn = 100, Pb = 35, Cu = 1, Sn = 30, Ba = 1 812, Cd = 150, Cr total =20, Ni = 55, Co = 17, Ag = 180, Hg = 4, As = 85, Mn = 700, Ti = 1 200, Se = 8, Be = 10, V = 50, F = 125.

Les résistances à la lixiviation étant insuffisante, ils sont enrobés dans une matrice à base de ciment Portland de faible porosité (150 kg de ciment/m³).

## EXEMPLE 7

Des suies d'incinération d'ordures ménagères issues du procédé par voie sèche et de compositions analogues à celles de l'exemple 1, sont additionnées de liant à base de sulfo-aluminate de calcium en proportion de 50 % de liant rapporté au poids de mélange.

Après durcissement à l'air, les particules ont une résistance à la pénétration moyenne de 35 kg/cm². 

Les particules sont ensuite reprises et stabilisées dans une matrice cimentière à base d'aluminate de calcium. Le test de relargage AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 8

Des suies d'incinération d'ordures ménagères issues du procédé par voie sèche sont analysées.

Leur composition chimique est analogue à celle des suies de l'exemple 1.

La teneur en sulfates solubles n'étant pas suffisamment élevée pour provoquer ultérieurement des gonflements et l'action globale des ions étant retardatrice, les suies sont additionnées de liant à base de sulfo-aluminate de calcium (50 %) et granulées avec 13,5 % d'eau. Après durcissement à l'air, les particules ont une résistance à la pénétration moyenne de 35 kg/cm². Les granules ont alors la composition chimique suivante (exprimée en pourcentage pondéral) :

$SiO_2$ = 21,55 %, $Al_2O_3$ = 22,48 %, $Fe_2O_3$ = 2,27 %, CaO = 34,6 %, MgO = 2,88 %, $Na_2O$ = 2,17 %, $K_2O$ = 1,6 %, sulfates = 10,17 %, Cl = 2,49 % et exprimée en mg/kg de granules,

Zn = 9 500, Pb = 3500, Cu = 106, Sn = 1020, Ba = 1812, Cd = 150, Cr total = 200, Ni = 55, Co = 17, Ag = 180, Hg = 4, As = 40, Mn = 700, Ti = 3 500, Se = 8, Be = 10, V = 50, F = 63.

Ne satisfaisant pas aux conditions de lixiviation, les granules sont ensuite repris et stabilisés dans une matrice cimentière à base d'aluminate de calcium (dosage de 160 kg/m³). Le test de relargage AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 9

Un résidu d'incinération d'ordures ménagères par voie semi-sèche contient 8 200 mg de Pb par kg de résidu, 300 mg de Cd par kg de résidu, 45 mg de Hg par kg de résidu, 2 500 mg de Zn par kg de résidu, 170 000 mg de chlore par kg de résidu et des matières organiques. Les tests de lixiviation normalisés (AFNOR X 31-210) montrent une fraction soluble de 45 % et des taux de relargage (pour un total de trois lixiviations) de 7 mg de Pb par kg de résidu, 6 mg de Cd par kg de résidu, 6 mg de Hg par kg de résidu, 10 mg de Zn par kg de déchet, 160 000 mg de chlore par kg de résidu.

La teneur en sulfates solubles n'étant pas suffisamment élevée pour provoquer des gonflements du matériau et l'action globale des ions étant retardatrice, le résidu est additionné de ciment Portland à raison de 55 % de résidu pour 45 % de liant, d'un accélérateur de durcissement à base d'aluminate de calcium (15 % pour 85 % de ciment Portland) et puis humidifié avec 15 % d'eau. Après agglomération et durcissement à l'air, les agglomérats ont une résistance moyenne à la pénétration (dureté) de 35 kg/cm².

Ils sont ensuite repris et enrobés de ciment où ils jouent le rôle de charge : la résistance en compression à deux jours est de 180 kg/cm² et la perméabilité dans les conditions opératoires décrites dans l'exemple 1 est de 13,5 %. Le test de lixiviation AFNOR X 31-210 modifié sur les prismes de 4 cm par 4 cm par 8 cm donne une fraction soluble inférieure à 5 % et des taux d'extraction inférieurs à la limite de détection des appareils d'analyse.

## EXEMPLE 10

Un résidu d'incinération d'ordures ménagères par voie semi-humide contient 8 400 mg de Pb par kg de résidu, 370 mg de Cd par kg de résidu, 360 mg de Hg par kg de résidu, 24 000 mg de Zn par kg de résidu, 190 000 mg de chlore par kg de résidu et des matières organiques. Les tests de lixiviation normalisés (AFNOR X 31-210) montrent une fraction soluble de 43 % et des taux de relargage (sur un total de trois lixiviations) de 5 mg de Pb par kg de résidu, 3 mg de Cd par kg de résidu, 6 mg de Hg par kg de résidu, 3 mg de Zn par kg de résidu et 60 000 mg de chlore par kg de résidu.

La teneur en sulfates solubles n'étant pas suffisamment élevée pour provoquer ultérieurement des gonflements et l'action globale des ions étant retardatrice, le résidu est additionné de ciment Portland (50 % de résidu pour 50 % de liant) et d'un accélérateur de durcissement à base d'aluminate de calcium (25 % pour 75 % de ciment Portland), puis granulé avec 13 % d'eau.

Après durcissement à l'air, les granules ont une résistance de 36 kg/cm$^2$.

Toutefois leur résistance à la lixiviation étant insuffisante, les granules sont ensuite repris et stabilisés dans un coulis à base de ciment Portland : la résistance en compression à deux jours est de 150 kg/cm$^2$. Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 11

Un résidu d'incinération d'ordures ménagères par le procédé en voie humide et que nous appellerons par la suite "gâteau de filtration", contient 3 200 mg de Pb par kg de résidu, 160 mg de Cd par kg de résidu, 360 mg de Hg par kg de résidu, 9 500 mg de Zn par kg de résidu, 10 000 mg de chlore par kg de résidu et des matières organiques. Les tests de lixiviation normalisés (AFNOR X 31-210) montrent une fraction soluble de 20 % et des taux de relargage (pour un total de trois lixiviations) de 5 mg de Pb par kg de résidu, 0,3 mg de Cd par kg de résidu, 0,6 mg de Hg par kg de résidu, 3 mg de Zn par kg de résidu et 10 000 mg de chlore par kg de résidu.

La teneur en sulfates solubles n'étant pas suffisamment élevée pour provoquer ultérieurement des gonflements et l'action globale des ions étant retardatrice, le résidu est additionné de ciment Portland (70 % de résidu pour 30 % de liant) et d'un accélérateur de durcissement à base d'aluminates de calcium (30 % pour 70 % de ciment Portland), puis granulé avec 10 % d'eau. Après durcissement, les granules ont une résistance de 36 kg/cm$^2$.

Leur résistance à la lixiviation étant insuffisante, ces granules sont ensuite repris et stabilisés dans une matrice à base de ciment Portland où ils jouent le rôle de charge : la résistance en compression à deux jours est de 100 kg/cm$^2$. Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 12

Un gâteau de filtration de mêmes caractéristiques que celles de l'exemple 11 est additionné de ciment Portland (30 % de liant pour 70 % de résidu) et d'un accélérateur de durcissement à base d'aluminates de calcium (30 % pour 70 % de ciment Portland), puis extrudé avec 10 % d'eau et découpé en cylindres d'environ 5 cm de long.

Après durcissement, les cylindres ont une résistance à la pénétration de 30 kg/cm$^2$ mais ne satisfont pas aux tests de lixiviation.

Ils sont alors repris et stabilisés dans un béton à base de ciment Portland (dosage de 156 kg/m$^3$). La résistance du béton à un jour est de 100 kg/cm$^2$. Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 13

Un gâteau de filtration contient 3 200 mg de Pb par kg de gâteau, 160 mg de Cd par kg de gâteau, 360 mg de Hg par kg de gâteau, 9 500 mg de Zn par kg de gâteau, 10 000 mg de chlore par kg de gâteau et des matières organiques. Les tests de lixiviation normalisés (AFNOR X 31-210) montrent une fraction soluble de 20 % et des taux de relargage (pour un total de trois lixiviations) de 5 mg de Pb par kg de gâteau traité, 0,3 mg de Cd par kg de gâteau, 0,6 mg de Hg par kg de gâteau, 3 mg de Zn par kg de gâteau et 10 000 mg de chlore par kg de gâteau.

La teneur en sulfates solubles n'étant pas suffisamment élevée pour provoquer ultérieurement des gonflements et l'action globale des ions étant retardatrice, le gâteau de filtration est additionné de ciment Portland (30 % de liant pour 70 % de résidu) et d'un accélérateur de durcissement à base d'aluminate de calcium (30

**11**

% pour 70 % de ciment Portland), puis granulé avec 10 % d'eau.

Après durcissement les granules présentant une résistance à la lixiviation insuffisante sont repris et immergés dans une matrice cimentière. La matrice cimentière est composée de ciment Portland (100 kg/m³), de sable (de granulométrie inférieure à 100 μm) et d'un entraîneur d'air (1 % mélange ciment + sable). Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 14

Un gâteau de filtration de mêmes caractéristiques que celles de l'exemple 11 est analysé. La teneur en sulfates solubles n'étant pas suffisamment élevée pour provoquer des gonflements du matériau et l'action globale des ions étant retardatrice, le gâteau est additionné de ciment Portland (30 % de liant pour 70 % de résidu) et d'un accélérateur de durcissement à base d'aluminates de calcium (30 % pour 70 % de ciment Portland), puis granulé avec 10 % d'eau.

Après durcissement, les granules ne résistant pas suffisamment à la lixiviation sont ensuite repris et stabilisés dans un béton de très hautes performances contenant des fumées de silice et un plastifiant (mélamine). La porosité, mesurée de façon classique à l'aide d'un porosimètre à mercure, est de 12 % et la perméabilité de 28 x 10⁻¹² m/s. Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 15

Un gâteau de filtration de caractéristiques identiques à celles de l'exemple 11 est additionné de ciment Portland (30 % de liant pour 70 % de résidu) et d'un accélérateur de durcissement à base d'aluminate de calcium (30 % pour 70 % de ciment Portland), puis granulé avec 10 % d'eau. Les granules sont durcis par passage à l'autoclave.

Après durcissement les granules ne présentant pas une résistance à la lixiviation suffisante sont repris et stabilisés dans une matrice de ciment Portland de très haute performance contenant des fumées de silice (10% rapporté au liant) et un plastifiant (1 % rapporté au liant). La porosité est de 12 % et la perméabilité de 28 x 10⁻¹² m/s. Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 16

Un gâteau de filtration de caractéristiques identiques à celles de l'exemple 11 est additionné de ciment Portland (50 % de liant pour 50 % de résidu) et d'un accélérateur de durcissement à base d'aluminates de calcium (30 % pour 70 % de ciment Portland), puis granulé avec 10 % d'eau. Les granules ainsi obtenus sont durcis par carbonatation dans une étuve.

Après durcissement, les granules sont ensuite repris et stabilisés dans un béton de hautes performances contenant des fumées de silice (8 % rapporté au liant) et un plastifiant à base de lignosulfonate (1 % rapporté au liant). La porosité est de 13 % et la perméabilité de 25 x 10⁻¹² m/sec. Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyse.

## EXEMPLE 17

Un gâteau de filtration de caractéristiques identiques à celles de l'exemple 11 est additionné de ciment Portland (30 % de liant pour 70 % de résidu) et d'un accélérateur de durcissement à base d'aluminates de calcium (30 % pour 70 % de ciment Portland), puis aggloméré avec 10 % d'eau. Les agglomérats sont durcis par stockage à l'air.

Après durcissement les agglomérats ne présentant pas une résistance suffisante à la lixiviation sont donc repris et stabilisés dans un coulis de mortier à base de ciment Portland. Le test de lixiviation AFNOR X 31-210 modifié sur des prismes de 4 cm par 4 cm par 8 cm donne une fraction soluble inférieure à 5 % et des taux d'extraction inférieurs à la limite de détection des appareils d'analyse.

**EXEMPLE 18**

Des suies issues du procédé sec contiennent 2 000 mg de Pb par kg de suies, 100 mg de Cd par kg de suies, 9 mg de Hg par kg de suies, 7 500 mg de Zn par kg de suies, 20 000 mg de chlore par kg de suies et des matières organiques. Les tests de lixiviation normalisés (AFNOR X 31-210) montrent une fraction soluble de 25 % et des taux de relargage (pour un total de trois lixiviations) de 200 mg de Pb par kg de suies traitées, 3 mg de Cd par kg de suies, 0,6 mg de Hg par kg de suies, 230 mg de Zn par kg de suies et 15 000 mg de chlore par kg de suies.

La teneur en sulfates solubles n'étant pas suffisamment élevée pour provoquer ultérieurement des gonflements et l'action globale des ions étant retardatrice, les suies sont mélangées à du ciment Portland (65 %) et à un accélérateur de durcissement à base d'aluminates de calcium (30 % de ciment fondu), puis mélangées avec 15 % d'eau et granulées.

Après durcissement à l'air, les granules ont une résistance à la pénétration de 35 kg/cm². Un contrôle des particules donne une fraction soluble inférieure à 4 % et des taux d'extraction inférieurs à la limite de détection des appareils.

La troisième étape n'est donc pas nécessaire, les granules peuvent être mis en décharge sans traitement supplémentaire.

**Revendications**

1/ Procédé de traitement des résidus d'incinération de déchets urbains ou industriels, caractérisé en ce qu'il comporte :
- une première étape d'analyse chimique des résidus d'incinération en vue de déterminer :
  . leur teneur en sulfates solubles dans l'eau,
  . l'action globale, retardatrice ou accélératrice, des ions solubles dans l'eau et pouvant gêner la prise ou le durcissement d'un ciment Portland,
- une deuxième étape au cours de laquelle on mélange ou concasse les résidus d'incinération des déchets urbains ou industriels avec de l'eau, un liant hydraulique et des additifs, puis on granule avec de l'eau le mélange obtenu et on laisse durcir les granules, la nature et la proportion dudit liant hydraulique et desdits additifs ayant été choisies de façon à permettre à la fois la neutralisation physique et/ou chimique des éléments gênants, à l'égard de la prise ou durcissement d'un ciment Portland, présents dans les déchets, et l'obtention de granules de basse porosité et de basse perméabilité.

2/ Procédé selon la revendication 1, caractérisé en ce que le liant hydraulique de la deuxième étape est du clinker broyé lorsque la solution obtenue par trempage du résidu dans l'eau, selon un rapport masse d'eau/masse de résidu de 10 environ, est saturée en sulfates.

3/ Procédé selon la revendication 1, caractérisé en ce que le liant hydraulique de la deuxième étape est du ciment Portland, du ciment magnésien, du ciment alumineux, du ciment à base de sulfoaluminate de calcium ou un mélange de ces ciments lorsque la solution obtenue par trempage de 100 g de résidu par litre d'eau n'est pas saturée en sulfates.

4/ Procédé selon l'une des revendications 1 à 3, caractérisé en ce que, lorsque l'action globale des ions solubles est retardatrice, l'additif est un accélérateur ou un mélange d'accélérateurs choisis dans le groupe constitué par la triéthanolamine, le formiate de calcium, le ciment alumineux ou tout autre accélérateur de la prise ou du durcissement d'un ciment Portland.

5/ Procédé selon l'une quelconque des revendications 1 à 3, caractérisé en ce que, lorsque l'action globale des ions solubles est accélératrice, l'additif est un retardateur ou un mélange de retardateurs choisis dans le groupe constitué par les sucres, le tripolyphosphate de sodium, les complexants du calcium, ou tout autre retardateur de la prise ou du durcissement d'un ciment Portland.

6/ Procédé selon l'une quelconque des revendications 1 à 5, caractérisé en ce que l'additif est ajouté dans une proportion en poids par rapport au liant hydraulique inférieure ou égale à 5 % sauf s'il s'agit de ciment alumineux auquel cas il est ajouté dans une proportion inférieure à 30 %.

7/ Procédé selon l'une quelconque des revendications 1 à 6, caractérisé en ce que dans la seconde étape l'on ajoute 10 % à 30 % en masse d'eau par rapport à la quantité de liant hydraulique et d'additif.

8/ Procédé selon l'une quelconque des revendications 1 à 7, caractérisé en ce que la teneur en liant hydraulique renfermant l'additif est comprise entre 15 % et 70 % , de préférence entre 30 % et 40 % rapportée à la masse de mélange résidu + liant.

9/ Procédé selon l'une quelconque des revendications 1 à 8, caractérisé en ce que le mélange obtenu au cours de la deuxième étape est soumis à une opération de granulation, de pelletisation, d'extrusion, d'agglo-

13

mération ou toute autre opération similaire connue de l'homme du métier.

10/ Procédé selon l'une quelconque des revendications 1 à 9, caractérisé en ce que le durcissement des granules s'effectue à l'air ou par tout autre procédé de maturation.

11/ Procédé selon l'une quelconque des revendications 1 à 10, caractérisé en ce qu'il comporte en outre une troisième étape d'incorporation des granules dans une pâte cimentière.

12/ Procédé selon l'une quelconque des revendications 1 à 11, caractérisé en ce que le choix du liant hydraulique et des additifs selon les résultats de l'analyse de la première étape est réalisé conformément aux prescriptions données dans le tableau suivant :

| 1ère étape | | | | | | |
|---|---|---|---|---|---|---|
| Teneur en sulfates solubles | - | | - | | + | + |
| Action globale | - | - | + | - | - | + |
| Origine des déchets | VS VSS VSH | VS VSS VSH | VH | VS VSH VSS | VSH VSS VS | VH |
| 2e étape | | | | | | |
| Liant hydraulique | CP | CSA | CP | CK | CK | CK |
| Addition | CA | - | ret | accél. | CA | ret |
| 3e étape | | | | | | |
| Pâte cimentière | CP | CA | CP | CP | CP | CP |

Légende

- action globale retardatrice des résidus d'incinération des déchets
+ action globale accélératrice des résidus d'incinération des déchets
VS voie sèche
VSS voie semi-sèche
VSH voie semi-humide
VH voie humide
CP ciment Portland
CSA ciment à base de sulfo-aluminate de calcium
CK clinker broyé de ciment Portland
CA ciment alumineux
accél. ajout accélérateur
ret. ajout retardateur

13/ Procédé selon la revendication 11 ou la revendication 12, caractérisé en ce que le rapport massique eau/ciment dans la troisième étape est compris entre 0,3 et 0,7.

14/ Procédé selon l'une des revendications 11 à 13, caractérisé en ce que la pâte cimentière de la troisième étape renferme des adjuvants tels que des plastifiants ou des plastifiants réducteurs d'eau et/ou des ajouts de dimension moyenne inférieure ou de l'ordre de 100 microns tels que des fumées de silice ou des fillers.

15/ Les granules préparés selon l'une des revendications 1 à 10.

16/ Les granules selon la revendication 15, caractérisés en ce qu'ils présentent la composition suivante :

$SiO_2$ de 15 % à 45 %, $Al_2O_3$ de 9 % à 26 %, $Fe_2O_3$ de 0,5 % à 10 %, CaO de 9 % à 53 %, MgO de 1 % à 7 %, $Na_2O$ de 0,5 % à 6 %, $K_2O$ de 0 3 % à 6 %, sulfates de 2 % à 10 %, Cl = de 0, 5 % à 6 %,

et des éléments mineurs à raison de 3 000 à 100 000 mg/kg de résidus traités avec en proportion pondérale : Zn de 40 % à 70 %, Pb de 1 % à 30 %, Cu de 0 % à 5%, Sn de 1 % à 5 %, Ba de 0,5 % à 9,52 %, Cd de 0,5 % à 2 %, Cr total de 0,5 % à 2 %, Ni de 0,2 % à 1 %, Co de 0,1 % à 1 %, Ag de 0,2 % à 1 %, Hg de 0,01 % à 0,05 %, As de 0,24 % à 0,4 %, Mn de 0,5 % à 6 %, Ti de 5 % à 20 %, Se de 0,01 % à 0,10 %, Be de 0,01 % à 0,1 %, V de 0,1 % à 1 %, et F de 0,01 % à 0,20 %,

et en ce que leur résistance à la pénétration (dureté mesurée par la méthode VICKERS (selon la norme NF A 03-150) est supérieure à 20 kg/cm² et en ce que leur résistance en compression est supérieure à 50 kg/cm².

**17/** Les bétons préparés selon l'une quelconque des revendications 11 à 14.

**18/** Bétons selon la revendication 17, caractérisés en ce qu'ils incorporent les granules définis dans la revendication 16.

EP 0 549 492 A1

Office européen des brevets

# RAPPORT DE RECHERCHE EUROPEENNE

Numero de la demande

EP 92 42 0470

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 369 946 (FAIRTEC AG)<br>* Abrégé *<br>* page 2, ligne 29 - ligne 30 *<br>--- | 1,15,17 | C04B18/10<br>C04B18/02<br>C04B40/00<br>B28C7/00 |
| Y | US-A-3 170 677 (M. PHISTER ET AL.)<br>* colonne 7, ligne 37 - ligne 47;<br>revendication 1 *<br><br>----- | 1,15,17 | |

**DOMAINES TECHNIQUES RECHERCHES (Int. Cl.5)**

B28C
C04B

Le présent rapport a été établi pour toutes les revendications

| Lieu de la recherche | Date d'achèvement de la recherche | Examinateur |
|---|---|---|
| LA HAYE | 31 MARS 1993 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................
& : membre de la même famille, document correspondant

EPO FORM 1503 03.82 (P0402)

16